# EUROPEAN PATENT APPLICATION

(11) **EP 3 534 270 A1**
(43) Date of publication of application: **04.09.2019**
(21) Application number: 17863311.1
(22) Date of filing: 24.05.2017
(51) Int. Cl.: G06F 13/16

(54) **METHOD AND APPARATUS FOR RECEIVING DATA BASED ON SERIAL FLASH CONTROLLER**

(30) Priority: 31.10.2016 CN 201610934188
(71) Applicant: Sanechips Technology Co., Ltd., Shenzhen, Guangdong 518055 (CN)
(72) Inventor: ZHANG, Kang, Shenzhen Guangdong 518055 (CN); ZHANG, Yaguo, Shenzhen Guangdong 518055 (CN); YANG, Pei, Shenzhen Guangdong 518055 (CN)
(74) Representative: D'Halleweyn, Nele Veerle Trees Gertrudis
(86) International application number: PCT/CN2017/085779
(87) International publication number: WO 2018/076679

(57) **Abstract**

Disclosed is a method and an apparatus for receiving data based on a serial Flash controller, and a computer storage medium, the method includes: obtaining a value of a sampling selection register when a serial Flash controller receives input data sent by a Flash chip, and determining a sampling delay time according to the value of the sampling selection register and a second working clock signal, herein, the second working clock signal is a working clock signal of the serial Flash controller (101); and adjusting a sampling start time point to perform sampling according to the sampling delay time to receive the input data, herein the sampling start time point is a time point at which sampling starts to be performed on the input data sent by the Flash chip by using the second working clock signal as a sampling signal (102).

## Description

### Cross Reference to Related Application

The present application is proposed based on a Chinese patent application No. 201610934188.6, filed on October 31, 2016, and claims the priority to the Chinese patent application, the entire content of which is hereby incorporated by reference.

### Technical Field

The present invention relates to the field of communication, and particularly, to a method and apparatus for receiving data based on a serial Flash controller, and a computer storage medium.

### Background

At present, there are a serial output clock and a serial input clock in the serial Flash controller, herein the Flash controller outputs data to the Flash chip with a serial output clock signal, and the Flash controller samples the data input by the Flash chip with a serial input clock signal. For the data and serial output clock transmitted from the Flash controller to the Flash chip, the delay times for the two on the line are the same, and they arrive at the Flash chip almost at the same time. However, for the data transmitted from the Flash chip to the serial Flash controller and the serial input clock, the difference between the delay times of the two on the line is large, and the delay time of the serial input clock is less than that of the input data. When the data is sent at the falling edge of the Flash chip and the data is sampled at the rising edge of the Flash controller, a margin of half of a period can only meet the requirement of correctly sampling the data under the condition of low frequency. For the serial clock with a higher frequency, the data sampling of the serial Flash controller will go wrong. It can be seen that the serial clock frequency is low when the serial Flash controller receives data from the Flash chip, and it is difficult to meet the higher speed data transmission.

Therefore, there is an urgent need for a solution based on receiving data by a serial Flash controller, so as to improve the data transmission speed between the serial Flash controller and the Flash chip.

### Summary

In view of this, Embodiments of the present invention intend to provide a method and apparatus for receiving data based on a serial Flash controller and a computer storage medium, by which the data transmission speed between the serial Flash controller and the Flash chip can be improved.

Solutions of the embodiments of the present invention are implemented as follows.

In one aspect, an embodiment of the present invention provides a method for receiving data based on a serial Flash controller, the method includes:
when a serial Flash controller receives input data sent by a Flash chip, obtaining a value of a sampling selection register, and according to the value of the sampling selection register and a second working clock signal, determining a sampling delay time; herein, the second working clock signal is a working clock signal of the serial Flash controller; and
according to the sampling delay time, adjusting a sampling start time point to perform sampling to receive the input data; herein the sampling start time point is a time point at which sampling starts to be performed on the input data sent by the Flash chip by using the second working clock signal as a sampling signal.

In the above solution, the method further includes:
sending a preset first working clock signal to the Flash chip;
herein, a frequency of the first working clock signal is less than a frequency of the second working clock signal.

In the above solution, the method further includes:
determining a sampling delay period coefficient according to the second working clock signal and a delay of the input data;
adjusting the value of the sampling selection register according to the sampling delay period coefficient.

In the above solution, for each stream of the input data, the method further includes:
determining a delay coefficient according to the delay of the input data and a delay precision of a clock buffer;
determining a value of a clock buffer selection register and a value of a data delay selection register according to the delay coefficient.

In the above solution, when receiving input data from the Flash chip in a multiplexing transmission mode, before obtaining the value of the sampling selection register, for each stream of the input data, the method further includes:
obtaining the value of the clock buffer selection register and the value of the data delay selection register;
determining a buffering delay of the input data according to the value of the clock buffer selection register, the value of the data delay selection register and the delay precision of the clock buffer;
adjusting an arrival time of the input data according to the buffering delay of the input data.

In one aspect, an embodiment of the present invention also provides an apparatus for receiving data based on a serial Flash controller, the apparatus includes: a sampling delay unit, a sampling selection unit and a sampling unit; herein,
the sampling delay unit is configured to obtain a value of the sampling selection unit when the serial Flash controller receives input data sent by a Flash chip, and determine a sampling delay time according to the value of the sampling selection unit and a second working clock signal; herein the second working clock signal is a working clock signal of the serial Flash controller;
the sampling unit is configured to adjust a sampling start time point to perform sampling according to the sampling delay time to receive the input data; herein the sampling start time point is a time point at which sampling starts to be performed on the input data sent by the Flash chip by using the second working clock signal as a sampling signal.

In the above solution, the apparatus further includes a sending unit, configured to send a preset first working clock signal to the Flash chip; herein a frequency of the second working clock signal is greater than the frequency of the first working clock signal.

In the above solution, the apparatus further includes a delay sampling parameter configuring unit, configured to:
determine a sampling delay period coefficient according to the second working clock signal and a delay of the input data;
adjust the value of the sampling selection register according to the sampling delay period coefficient.
In the above solution, the apparatus further includes a delay buffer unit, a clock buffer unit, a clock buffer selection unit and a data delay selection unit,
herein, the delay buffer unit is configured to:
   obtain a value of the clock buffer selection unit and a value of the data delay selection unit for each stream of the input data before obtaining the value of the sampling selection register, when receiving input data from the Flash chip in a multiplexing transmission mode,
   determine a buffering delay of the input data according to the value of the clock buffer selection register, the value of the data delay selection register and a delay precision of the clock buffer;
   adjust an arrival time of the input data according to the buffering delay of the input data.

In the above solution, the apparatus further includes a delay buffer parameter configuring unit, configured to,
determine a delay coefficient according to the delay of the input data and the delay precision of the clock buffer for each stream of the input data;
determine the value of the clock buffer selection unit and the value of the data delay selection unit according to the delay coefficient.

The sampling delay unit, the sampling selection unit, the sampling unit, the sending unit, the delay sampling parameter configuring unit, the delay buffer unit, the clock buffer unit, the clock buffer selection unit, the data delay selection unit and the delay buffer configuring unit can be implemented with a central processing unit (CPU, Central Processing Unit), a Digital Signal Processor (DSP, Digital Signal Processor) or a programmable logic array (FPGA, Field-Programmable Gate Array) when implementing the processing.

An embodiment of the present invention further provides a computer storage medium, storing computer executable instructions, herein, the computer executable instructions are configured to execute the above method for receiving data based on a serial Flash controller.

According to the solution for receiving data based on the serial Flash controller in an embodiment of the present invention, when a serial Flash controller receives input data sent by a Flash chip, a value of a sampling selection register is obtained, and the sampling delay time is determined according to the value of the sampling selection register and a second working clock signal; herein, the second working clock signal is a working clock signal of the serial Flash controller; according to the sampling delay time, a sampling start time point is adjusted to perform sampling to receive the input data; herein the sampling start time point is a time point at which sampling starts to be performed on the input data sent by the Flash chip by using the second working clock signal as a sampling signal. In this way, the serial input clock signal is cancelled, the input data is sampled through the working clock signal of the serial Flash controller, and sampling delaying is implemented at the beginning of sampling. Thus stable input data can be received while the frequency of sampling the input data sampled by the serial Flash controller is improved, then the rate of receiving the input data of the Flash chip by the Flash controller is improved and the data transmission between the serial Flash controller and the Flash chip is accelerated.

### Brief Description of Drawings

FIG. 1 is a flowchart diagram of a method for receiving data based on the serial Flash controller provided in embodiment one of the present invention.
FIG. 2 is a structural schematic diagram of an 8-stage delay buffer selection unit provided in embodiment two of the present invention.
FIG. 3 is a structural schematic diagram of a delay buffer unit including 32-stage delay buffer selection unit provided in embodiment two of the present invention.
FIG. 4 is a structural schematic diagram of an apparatus for receiving data based on the serial Flash controller provided in embodiment three of the present invention.
FIG. 5 is a structural schematic diagram of another apparatus for receiving data based on the serial Flash controller provided in embodiment three of the present invention.
FIG. 6 is a schematic diagram of a connection structure between QSPI and Flash according to embodiment four of the present invention.

### Detailed Description

In the following, the implementation of the solution will be described in further detail in combination of the accompanying drawings.

### Embodiment One

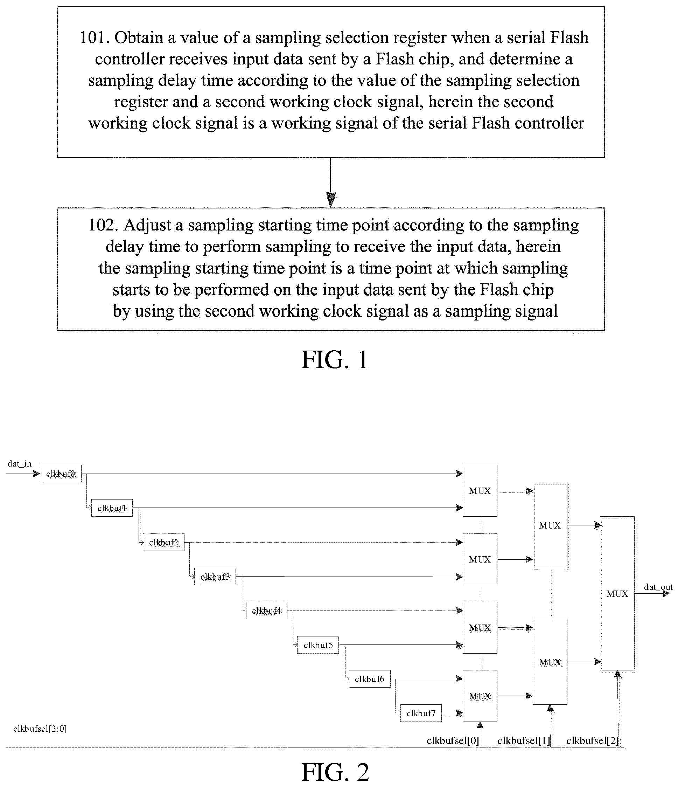

Embodiment one of the present invention provides a method for receiving data based on a serial Flash controller, as shown in FIG. 1, the method includes steps S101 and S102.

In S101, a value of a sampling selection register is obtained when a serial Flash controller receives input data sent by a Flash chip, and a sampling delay time is determined according to the value of the sampling selection register and a second working clock signal; herein, the second working clock signal is a working clock signal of the serial Flash controller.

Here, the method further includes: sending a preset first working clock signal to the Flash chip; herein a frequency of the first working clock signal is less than a frequency of the second working clock signal.

Before the serial Flash controller receives input data output by the Flash chip from the Flash chip, the serial Flash controller sends the first working clock signal to the Flash chip, and when the Flash chip sends data to the serial Flash controller, the received first working clock signal is used as a working clock signal to output data to the serial Flash controller.

Here, when the serial Flash controller sets the period or frequency of the first working clock signal, it can refer to its own working clock signal which is the second working clock signal, the period of the first working clock signal is greater than the period of the second working clock signal, that is, the frequency of the first working clock signal is less than the frequency of the second working clock signal, for example, the frequency of the second working clock signal is 100MHz, and the frequency of the first working clock signal is 50MHz.

It should be illustrated here is that the frequency of the first working clock signal in an embodiment of the present invention is greater than the frequency of the working clock signal of the Flash chip in the existing art, so that the frequency for outputting data by the Flash chip is improved.

When the serial Flash controller receives the input data sent by the Flash chip, before sampling the received data with the second clock signal, it is needed to determine a sampling start time point and obtain the value of the sampling selection register; and determine the sampling delay time according to the value of the sampling selection register and the second working clock signal.

Here, the sampling selection register is used to determine the number of periods to be delayed for the sampling start time point, the value of the sampling selection register is used as the number of sampling periods to be delayed, the second working clock signal is used as the delay clock to determine the sampling delay time, and the sampling start time point is delayed.

Here, by adjusting the value of the sampling selection register, the sampling delay period coefficient is used as the value of the sampling selection register, and the sampling time is controlled by the value of the sampling selection register, so that the sampling start time point is relatively delayed by the delay of the input data to receive stable input data. For example, when the input data arrives at the serial Flash controller, the obtained value of the sampling selection register is 2 and the period of the second working clock signal is 10ns, then the sampling delay time is determined to be 2^{∗}10ns, i.e. 20ns, the sampling start time point is delayed by 20ns.

Herein, the value of the sampling selection register is determined according to the delay of the input data. The specific details are as follows: determining a sampling delay period coefficient according to the delay of input data and the second working clock signal; adjusting the value of sampling selection register according to the sampling delay period coefficient. After determining the delay of the input data, a sampling starting time point is adjusted according to the delay of the input data and the sampling period by which the current serial Flash controller performs sampling when receiving the input data, i.e. the period of the second working clock signal, the specific details are as follows: determining the sampling delay period coefficient representing the number of sampling delay periods according to the period of the second working clock signal and the delay of the input data; adjusting the sampling start time point by controlling the value of the sampling selection register through the sampling delay period coefficient. In practical application, the user can configure in advance the value of the sampling selection register according to the delay of the data received by the serial Flash controller according to actual needs, such that when sampling is implemented, the value of the sampling selection register is directly obtained to adjust the sampling start time point.

Here, when the serial Flash controller receives the input data from the Flash chip in a multiplexing transmission mode, for each stream of the input data, the method further includes: determining the delay coefficient according to the delay of the input data and the delay precision of the clock buffer; determining the value of the clock buffer selection register and the value of the data delay selection register according to the delay coefficient.

When receiving the input data, before obtaining the value of the sampling selection register, for each stream of input data, the method further includes: obtaining the value of the clock buffer selection register and the value of the data delay selection register; determining the buffering delay of the input data according to the value of the clock buffer selection register, the value of the data delay selection register and the delay precision of the clock buffer; adjusting the arrival time of the input data according to the buffering delay.

Here, when data is transmitted through multiplex lines, by adjusting the delay of each stream of the input data, the multiplex streams of input data of the Flash chip can arrive at the serial Flash controller at the same time, and the time point for each stream of the input data to arrive at the serial Flash controller remains consistent, thus avoiding the situation that one stream of the input data has arrived but other streams of input data have not arrived.

Here, the input of each stage of data delay selection register is provided with a delay coefficient which is obtained by multiplexing a value obtained by adding the value of the clock buffer selection register by 1 with a value obtained by adding the value of the data delay selection register by 1, the delay coefficient represents the number of periods that needs to be delayed by the clock buffer, the buffering delay of the stream of data is obtained by multiplying the delay coefficient with the delay precision of the clock buffer, and the time point at which the stream of transmission data arrives at the serial Flash controller is delayed.

Specifically, the value range of the data delay selection register and the value range of the clock buffer selection register is determined according to the number of bits in the register. For example, when the data delay selection register is a 5-bit register, its value range is 0-31, and when the clock buffer selection register is a 3-bit register, its value range is 0-7. Here, the delay coefficient can be obtained by multiplexing a value obtained by adding the value of the data delay selection register by 1 with a value obtained by adding the value of the clock buffer selection register by 1. For example, the data delay selection register is a 5-bit register and the clock buffer selection register is a 3-bit register, for a stream of the input data, when the value of the corresponding clock buffer selection register corresponding to the stream of the input data is 6, the value of the data delay selection register is 1, and the delay precision of the clock buffer is 50ps, then the buffering delay of the input data is (6+1)^{∗}(1+1)^{∗}50ps, i.e. 14^{∗}50ps. That is, the received input data of this stream is delayed by 14^{∗}50ps, the time point at which the data of this stream arrives at the serial Flash control is delayed by 14^{∗}50ps.

It should be noted that for registers such as the clock buffer selection register and the data delay selection register, a starting value of the register is 0. Therefore, the number of output stages of the register actually set is greater than the value of the register by 1. For example, for a register with a bit-width of 3, when the value of the register is 0, the number of output stages of the register is 1.

Here, for setting or adjustment of the value of each register, it can be preset by the user. The specific setting is determined according to the delay of the stream of received data and the delay precision of the clock buffer, the delay coefficient is determined according to the delay of the data and the delay precision of the clock buffer, and the value of the clock buffer selection register and the value of the data delay selection register are further determined. For example, when the delay coefficient is 14, the value of the clock buffer selection register can be set to 6, and the value of the data delay selection register can be set to 1, then the delay coefficient is (6+1)^{∗}(1+1). The buffering delay of this input data before the input data arrives at the serial Flash controller is controlled by modifying the values of the clock buffer selection register and the data delay selection register.

In practical application, when the serial Flash controller is in a single-wire transmission mode, the adjustment of delay buffer may not be implemented.

In S102, a sampling start time point is adjusted according to the sampling delay time to perform sampling to receive the input data. Herein the sampling start time point is a time point at which sampling starts to be performed on the input data sent by the Flash chip by using the second working clock signal as a sampling signal.

When the delay time is determined, the time point at which the serial Flash controller starts to sample the input data is adjusted, and the input data is sampled from the sampling start time point, thereby receiving the data sent by the Flash chip.

The determined delay time includes the delay when the Flash chip outputs data, and also includes the delay when the data is transmitted through the connection line between the Flash chip and the serial Flash controller. The delay of the input data may also include Flash chip output delay, connection line, PAD and delay buffer.

In an embodiment of the present invention, the sampling start time point of data received by the serial Flash controller is adjusted. When the input data of the Flash chip arrives at the serial Flash controller, there is a certain delay. By adjusting the sampling start time point, the serial Flash controller takes the delay into account when receiving the input data to obtain stable input data, thus avoiding the situation that the sampled target data does not arrive at the serial Flash controller when starting to sample the data. And because the frequency of the second working clock signal is greater than the frequency of the first working clock signal, when the timing of each stream of the input data changes, the data sampled at the time of sampling is effective input data by adjusting the sampling start time point.

In an embodiment of the present invention, (1) the serial input clock signal of the serial Flash controller is cancelled, and the input data is sampled using the working clock; (2) for the multiplexing transmission mode, for each stream of the input data, a delay buffer is added between the serial data input port of the serial Flash controller and the data output port of the Flash chip; (3) the number of periods of the delay clock is set to control the time point at which the serial Flash controller samples the input data.

Through the adoption of the above means, compared with the existing solution of receiving data by the serial Flash controller, not only the data transmission rate is improved, the data transmission between the serial Flash controller and the Flash chip is accelerated, but also the problem that data arrives at the Flash controller with delay through PAD and connection lines etc. and the data is sampled too early is solved, thereby the data output by the Flash chip is correctly sampled, and the delay of each stream of the input data can be set respectively, so that the data output by the Flash chip arrives at the serial Flash controller at the same time.

### Embodiment two

In an embodiment of the present invention, the method for receiving data based on the serial Flash controller provided by the embodiment of the present invention is explained by taking QSPI as an example. QSPI is an extension of SPI interface, and as a serial Flash controller, it supports NorFlash operation and NandFlash operation. In this embodiment, the bit-width of the clock buffer selection register described is 3 bits, which can be expressed as clkbufsel[2:0], the bit-width of the data delay selection register is 5 bits, which can be expressed as datdlysel[4: 0], and the bit-width of the sampling selection register is 3 bits, which can be expressed as samplesel[2:0].

As shown in FIG. 2, eight clock buffers clkbufs are connected in series to form a clkbuf chain, the clkbufsel register is set to select which stage of the 8-stage delay buffer selection register for outputting, and a delay range is 1-8 clock buffers.

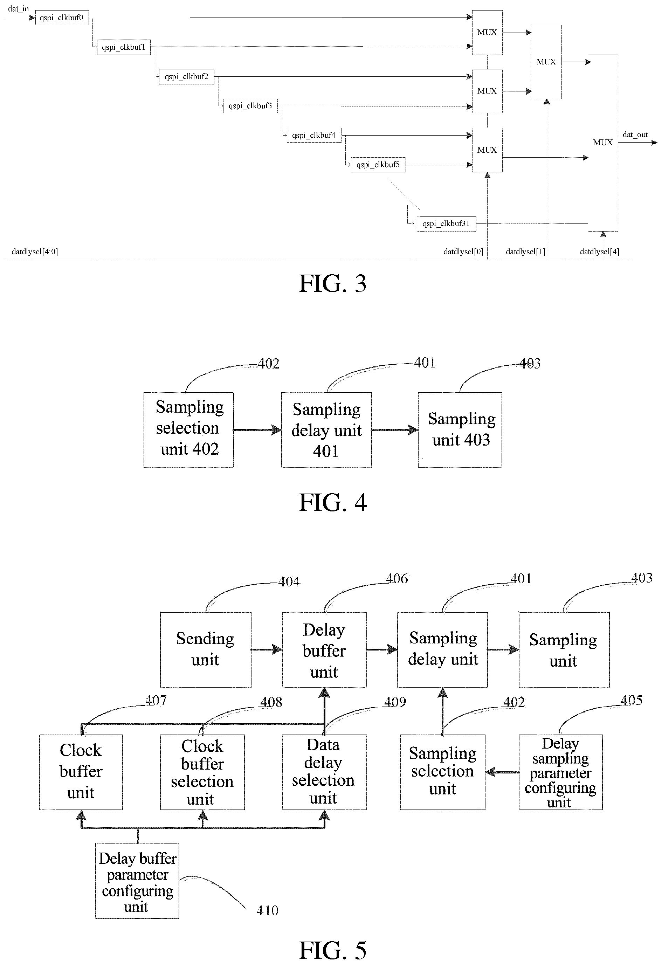

As shown in FIG. 3, 32 qspi_clkbuf units are connected in series to form a link, the datdlysel register is set to select which qspi_clkbuf of the 32-stage qspi_clkbuf selection unit for outputting, ranging from 1 to 32 stages. Here, the value of each qspi_clkbuf unit is determined by the clkbufsel register, and its value range is 0-7.

The calculation formula of the delay coefficient is (datdlysel+1)^{∗}(clkbufsel+1). By configuring the clkbufsel register and datdlysel register, the delay range of each stream of the input data is 1-256 clock buffers. When the delay precision of each clock buffer clkbuf is 50 ps, the maximum delay value of the qspi_clkbuf is 8^{∗}50 ps, and the maximum delay value of qspi_rxdatdly is 8^{∗}50^{∗}32 = 12800 ps.

By setting the clkbufsel register and the datdlysel register, the delay of each stream of the input data of QSPI is adjusted to overcome the problem that the output data of the Flash chip cannot arrive at QSPI at the same time. Assuming the value of the clkbufsel is 3' bOOl, and the value of the datdlysel is 5' b00111, herein 3' bOOl represents a binary value with a bit-width of 3 and a value of 1, and 5' b00111 represents a binary value with a bit-width of 5 and a value of 7. According to the delay numerical calculation formula, the delay of one stream of the input data of QSPI will increase by (1+1)^{∗}(7+1)^{∗}50ps, that is, 16^{∗}50ps.

Here, it is not needed to configure the clkbufsel register and the datdlysel register for the single-wire transmission mode.

After the data output by the Flash chip is sent to the QSPI for delay adjustment, the QSPI uses the working clock to sample the data, and the samplesel register controls the starting time point of delayed-sampling, with the delay range of 0-7 working clock periods. Assuming that the working clock frequency of QSPI is 100MHz, the clock period is 10ns, the serial output clock frequency is 50MHz, the time needed for outputting the data by the Flash chip is about 8ns, and the time needed for transmitting the data to QSPI through wires and the like is about 5ns, with a total delay of about 13ns, then the samplesel is set to 3' B010 with which stable input data may only be sampled.

Here, the delay of the input data is 13ns and the clock period of the QSPI working clock is 10ns, then the input data is not received within 10ns of the first period, and the data is received at the 3rd ns of the second period. Therefore, the samplesel is set to 2, delaying is performed for 2 sampling periods, and sampling is started at the beginning of the third sampling period.

### Embodiment Three

In order to implement the above solution, an embodiment of the present invention also provides an apparatus for receiving data based on the serial Flash controller, as shown in FIG. 4, the apparatus includes a sampling delay unit 401, a sampling selection unit 402 and a sampling unit 403.

The sampling delay unit 401 is configured to obtain a value of the sampling selection unit 402 when the serial Flash controller receives input data sent by a Flash chip, and determine a sampling delay time according to the value of the sampling selection unit and a second working clock signal; herein the second working clock signal is a working clock signal of the serial Flash controller.

The sampling unit 403 is configured to adjust a sampling start time point to perform sampling according to the sampling delay time to receive the input data; herein the sampling start time point is a time point at which sampling starts to be performed on the input data sent by the Flash chip by using the second working clock signal as a sampling signal.

As shown in FIG. 5, the device further includes a sending unit 404, the sending unit is configured to send a preset first working clock signal to the Flash chip; herein the frequency of the second working clock signal is greater than the frequency of the first working clock signal.

In an embodiment of the present invention, as shown in FIG. 5, the apparatus further includes a delay sampling parameter configuring unit 405, the delay sampling configuring unit is configured to: determine a sampling delay period coefficient according to the second working clock signal and a delay of the input data; adjust the value of the sampling selection register 402 according to the sampling delay period coefficient.

As shown in FIG. 5, the apparatus further includes a delay buffer unit 406, a clock buffer unit 407, a clock buffer selection unit 408, and a data delay selection unit 409. The delay buffer unit 406 is configured to, when receiving input data from the Flash chip in a multiplexing transmission mode, obtain a value of the clock buffer selection 408 unit and a value of the data delay selection unit 409 for each stream of the input data before obtaining the value of the sampling selection register, determine a buffering delay of the input data according to the value of the clock buffer selection unit 408, the value of the data delay selection unit 409 and a delay precision of the clock buffer unit 407; adjust an arrival time of the input data according to the buffering delay of the input data.

In this embodiment, as shown in FIG. 5, the apparatus further includes a delay buffer parameter configuring unit 410, configured to: for each stream of data, determine the delay coefficient according to the delay of the input data and the delay precision of the clock buffer unit 407; determine the value of the clock buffer selection unit 408 and the value of the data delay unit 409 according to the delay coefficient.

In practical application, the clock buffer unit 407 can be implemented by a clock buffer, and the sampling selection unit 402, the clock buffer selection unit 408 and the data delay selection unit 409 can be implemented by registers respectively, corresponding to the sampling selection register, the clock buffer selection register and the data delay selection register in embodiment one respectively. Here, the sampling selection register, the clock buffer selection register and the data delay selection register may constitute a register unit, and the sampling selection register, the clock buffer selection register and the data delay selection register are set in the register unit. The delay sampling parameter configuring unit 405 and the delay buffer parameter configuring unit 406 may be the same functional unit configured by the processor.

### Embodiment Four

In an embodiment of the present invention, an apparatus, in which adds a delay buffer unit is added, for receiving data based on a serial Flash controller is illustrated by taking QSPI in a four-wire transmission mode as an example.

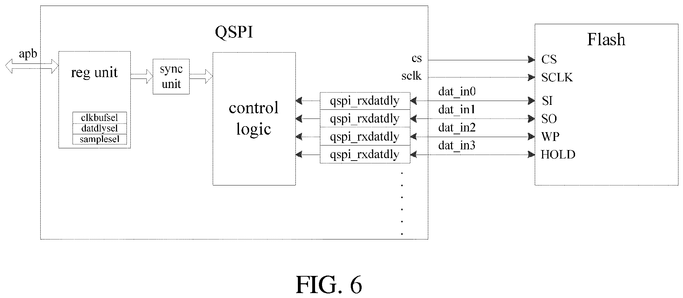

As shown in FIG. 6, the four data input transmission lines between the QSPI and the Flash chip can be dat_in0, dat_in1, dat_in2, dat_in3, respectively, as shown in FIG. 6. A description form which only expresses four data inputs is within the protection scope of an embodiment of the present invention, for example, the four data inputs can also be dat_in1, dat_in2, dat_in3, dat_in4. The four input data transmission lines are delayed and buffered respectively by corresponding data reception delay selection units, namely, qspi_rxdatdly1, qspi_rxdatdly2, qspi_rxdatdly3 and qspi_rxdatdly4, herein qspi_rxdatdly1, qspi-rxdatdly2, qspi_rxdatdly3, qspi_rxdatdly4 constitute a QSPI delay buffer selection unit qspi_rxdatdly.

As shown in FIG. 6, the data output by the Flash chip is input to the control logic unit control logic of the QSPI through the delay buffer unit qspi_rxdatdly, the clock buffer select register clkbufsel, the data delay select register datdlysel and the sample select register samplesel are located in the register unit reg unit, software can implement the configuration of the registers through APB interface. The clock of the register unit reg unit is different from the clock of the control logic unit control logic, and the register value is transferred to the control logic unit through the synchronization unit sync unit.

The present invention is described according to the flowchart and/or block diagram of the method, device (system) and computer program product of embodiments of the present invention. It should be understood that each flow and/or block in the flowchart and/or block diagram and a combination of flow and/or block in the flowchart and/or block diagram can be implemented by computer program instructions. These computer program instructions can be provided to a general-purpose computer, a special-purpose computer, an embedded processor or processors of other programmable data processing devices to generate a machine, which makes the instructions executed by the computer or processors of other programmable data processing devices generate a device used for implementing functions specified in one or multiple flows of the flowchart and/or in one or multiple blocks of the block diagram.

These computer program instructions can also be stored in computer readable memory which can guide the computer or other programmable data processing devices to work in a specific way, which makes the instructions stored in the computer readable memory generate articles including an instruction device, and the instruction device implements functions specified in one or multiple flows of the flowchart and/or in one or multiple blocks of the block diagram.

These computer program instructions also can be loaded on a computer or other programmable data processing devices, which causes a series of operation steps to be executed on the computer or other programmable devices to generate processing implemented by the computer, thus, the instructions executed by the computer or other programmable devices provide the steps used for implementing functions specified in one or multiple flows of the flowchart and/or in one or multiple blocks of the block diagram.

The embodiments described above are just preferred embodiments of the present invention and are not used for limiting the protection scope of the present invention.

### Industrial Applicability

According to the embodiment of the invention, when a serial Flash controller receives input data sent by a Flash chip, a value of a sampling selection register is obtained, and the sampling delay time is determined according to the value of the sampling selection register and a second working clock signal; herein, the second working clock signal is a working clock signal of the serial Flash controller; according to the sampling delay time, a sampling start time point is adjusted to perform sampling to receive the input data; herein the sampling start time point is a time point at which sampling starts to be performed on the input data sent by the Flash chip by using the second working clock signal as a sampling signal. In this way, the serial input clock signal is cancelled, the input data is sampled through the working clock signal of the serial Flash controller, and sampling delaying is implemented at the beginning of sampling. Thus, stable input data can be received while the frequency of sampling the input data by the serial Flash controller is improved, then the rate of receiving the input data of the Flash chip by the Flash controller is improved and the data transmission between the serial Flash controller and the Flash chip is accelerated.

## Claims

1. A method for receiving data based on a serial Flash controller, comprising:
obtaining a value of a sampling selection register when the serial Flash controller receives input data sent by a Flash chip, and determining a sampling delay time according to the value of the sampling selection register and a second working clock signal; wherein the second working clock signal is a working clock signal of the serial Flash controller; and
adjusting a sampling start time point to perform sampling according to the sampling delay time to receive the input data; wherein the sampling start time point is a time point at which sampling starts to be performed on the input data sent by the Flash chip by using the second working clock signal as a sampling signal.

2. The method according to claim 1, wherein the method further comprises:
sending a preset first working clock signal to the Flash chip;
wherein a frequency of the first working clock signal is less than a frequency of the second working clock signal.

3. The method of claim 1, wherein the method further comprises:
determining a sampling delay period coefficient according to the second working clock signal and a delay of the input data;
adjusting the value of the sampling selection register according to the sampling delay period coefficient.

4. The method of claim 1, wherein, for each stream of the input data, the method further comprises:
determining a delay coefficient according to the delay of the input data and a delay precision of a clock buffer;
determining a value of a clock buffer selection register and a value of a data delay selection register according to the delay coefficient.

5. The method of claim 1, when receiving input data from the Flash chip in a multiplexing transmission mode, before obtaining the value of the sampling selection register, for each stream of the input data, the method further comprises:
obtaining the value of the clock buffer selection register and the value of the data delay selection register;
determining a buffering delay of the input data according to the value of the clock buffer selection register, the value of the data delay selection register and the delay precision of the clock buffer;
adjusting an arrival time of the input data according to the buffering delay of the input data.

6. An apparatus for receiving data based on a serial Flash controller, comprising: a sampling delay unit, a sampling selection unit and a sampling unit; wherein
the sampling delay unit is configured to obtain a value of the sampling selection unit when the serial Flash controller receives input data sent by a Flash chip, and determine a sampling delay time according to the value of the sampling selection unit and a second working clock signal; wherein the second working clock signal is a working clock signal of the serial Flash controller;
the sampling unit is configured to adjust a sampling start time point to perform sampling according to the sampling delay time to receive the input data; wherein the sampling start time point is a time point at which sampling starts to be performed on the input data sent by the Flash chip by using the second working clock signal as a sampling signal.

7. The apparatus of claim 6, wherein the apparatus further comprises a sending unit;
the sending unit is configured to send a preset first working clock signal to the Flash chip; wherein a frequency of the second working clock signal is greater than the frequency of the first working clock signal.

8. The apparatus of claim 6, wherein the apparatus further comprises a delay sampling parameter configuring unit, configured to:
determine a sampling delay period coefficient according to the second working clock signal and a delay of the input data;
adjust the value of the sampling selection register according to the sampling delay period coefficient.

9. The apparatus of claim 6, wherein the apparatus further comprises a delay buffer unit, a clock buffer unit, a clock buffer selection unit and a data delay selection unit,
wherein the delay buffer unit is configured to:
obtain a value of the clock buffer selection unit and a value of the data delay selection unit for each stream of the input data before obtaining the value of the sampling selection register, when receiving input data from the Flash chip in a multiplexing transmission mode,
determine a buffering delay of the input data according to the value of the clock buffer selection register, the value of the data delay selection register and a delay precision of the clock buffer;
adjust an arrival time of the input data according to the buffering delay of the input data.

10. The apparatus of claim 9, wherein the apparatus further comprises a delay buffer parameter configuring unit, configured to:
determine a delay coefficient according to the delay of the input data and the delay precision of the clock buffer for each stream of the input data;
determine the value of the clock buffer selection unit and the value of the data delay selection unit according to the delay coefficient.

11. A computer readable storage medium, comprising computer executable instructions, wherein the computer executable instructions are configured to execute the method for receiving data based on a serial Flash controller according to any one of claims 1-5.
